(19) Europäisches Patentamt
European Patent Office
Office européen des brevets

(11) Veröffentlichungsnummer: **0 417 568 B1**

(12) **EUROPÄISCHE PATENTSCHRIFT**

(45) Veröffentlichungstag der Patentschrift: **20.07.94**

(51) Int. Cl.5: **C08L 33/06**, C08F 2/22

(21) Anmeldenummer: **90116728.8**

(22) Anmeldetag: **31.08.90**

# (54) Wässrige Kunstharzzubereitungen.

(30) Priorität: **13.09.89 DE 3930585**

(43) Veröffentlichungstag der Anmeldung:
**20.03.91 Patentblatt 91/12**

(45) Bekanntmachung des Hinweises auf die Patenterteilung:
**20.07.94 Patentblatt 94/29**

(84) Benannte Vertragsstaaten:
**AT BE CH DE FR GB IT LI**

(56) Entgegenhaltungen:
**EP-A- 0 010 000**
**FR-A- 1 573 343**

(73) Patentinhaber: **BASF Aktiengesellschaft**
**Carl-Bosch-Strasse 38**
**D-67063 Ludwigshafen(DE)**

(72) Erfinder: **Rehmer, Gerd, Dr.**
**Koenigsberger Strasse 1**
**D-6711 Beindersheim(DE)**
Erfinder: **Rau, Maria Gyopar, Dr.**
**Kaiserslauterer Strasse 36**
**D-6702 Bad Dürkheim(DE)**
Erfinder: **Wistuba, Eckehardt, Dr.**
**Im Obergarten 7**
**D-6702 Bad Dürkheim(DE)**
Erfinder: **Baecher, Reinhard, Dr.**
**Honigsaeckel 3**
**D-6702 Bad Duerkheim(DE)**
Erfinder: **Matthaei, Lothar**
**Westring 42**
**D-6714 Weisenheim(DE)**

EP 0 417 568 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft wäßrige Kunstharzubereitungen, im wesentlichen enthaltend

A) 3 bis 75 Gew.% wenigstens eines Kunstharzes, das aus

a) 50 bis 99,9 Gew.% wenigstens eines Esters aus 3 bis 6 C-Atome enthaltenden $\alpha,\beta$-monoethylenisch ungesättigten Carbonsäuren und 1 bis 18 ° C-Atome enthaltenden Alkanolen oder wenigstens eines Vinylesters einer 2 bis 8 C-Atome enthaltenden aliphatischen Monocarbonsäure oder eines Gemisches dieser Monomeren (Monomere a),

b) 0,1 bis 12 Gew.% wenigstens einer 3 bis 8 C-Atome enthaltenden $\alpha,\beta$-monoethylenisch ungesättigten ein- oder zweibasischen Säure, deren Anhydriden oder eines Gemisches dieser Monomeren (Monomere b),

c) 0 bis 10 Gew.% eines oder mehrerer monoethylenisch ungesättigter Acetophenon- oder Benzophenonderivate, oder eines Gemisches dieser Monomeren (Monomere c) und

d) 0 bis 35 Gew.% eines oder mehrerer sonstiger copolymerisierbarer monoethylenisch ungesättigter Monomeren (Monomere d), in einpolymerisierter Form,

aufgebaut ist, wobei die Gewichtsanteile der Monomeren a, b und d innerhalb der angegebenen Grenzen so gewählt sind, daß ein nur aus diesen Monomeren aufgebautes Kunstharz eine Glasübergangstemperatur von 40 bis -50 ° C aufweisen würde,

B) wenigstens ein metallisches Kation der Ladungszahl 2 bis 4 in wasserlöslicher Form,

C) 0 bis 10 Gew.%, bezogen auf das Kunstharz A, Benzophenon oder Acetophenon oder eines oder mehrerer nicht monoethylenisch ungesättigter Acetophenon- oder Benzophenonderivate oder eines Gemisches dieser Wirkstoffe,

D) wirksame Mengen an Emulgatoren oder Schutzkolloiden oder Gemischen dieser Wirkstoffe,

E) wenigstens 5 Gew.% Wasser und

F) 0 bis 85 Gew.% feinteilige Füllstoffe,

mit der Maßgabe, daß die Gesamtmenge, gebildet aus den Monomeren c und der Komponente C, bezogen auf das Kunstharz A, 0,05 bis 10 Gew.% beträgt und die Gesamtmenge der Kationen B so bemessen wird, daß sie die 0,2- bis 6-fache Menge der zur in Form der Monomeren b in das Kunstharz A eingebauten Menge an Säurefunktionen entsprechenden Menge ihrer konjugierten Basen zu neutralisieren vermag. Weiterhin betrifft die vorliegende Erfindung die Herstellung dieser wäßrigen Kunstharzubereitungen und ihre Verwendung als Massen zum Beschichten, Kleben, Dichten oder Imprägnieren.

Die DE-A 17 20 603 betrifft wäßrige Kunstharzdispersionen, deren Kunstharze neben Monomeren wie Acryl- und Methacrylsäureestern, Styrol, Acrylnitril und Vinylestern monoethylenisch ungesättigte Acetophenon- und/oder Benzophenonderivate einpolymerisiert enthalten, und die in Gegenwart von nichtionischen Emulgatoren wie

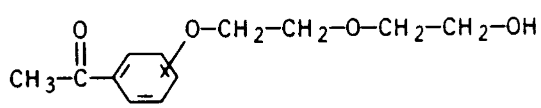

durch radikalische Emulsionspolymerisation erhalten werden. Diese Kunstharzdispersionen werden als Pigmentbindemittel, zur Folien- und Papierbeschichtung sowie zur Herstellung von Selbstglanzemulsionen und Textilappreturen empfohlen. Die Elastizität dieser Bindemittel im verfestigten Zustand vermag jedoch nicht voll zu befriedigen.

Die EP-B 10000 betrifft Zusammensetzungen mit einem Gehalt an

a) 10 bis 90 Gew.%, bezogen auf Feststoffe, eines polymeren Bindemittels und

b) 90 bis 10 Gew.%, bezogen auf Feststoffe, eines oder mehrerer Zusatzstoffe wie Dispergiermittel, Füllstoffe etc.,

wobei es sich beim polymeren Bindemittel um ein Additionspolymer mit einem Rückgrat aus copolymerisierten, ethylenisch ungesättigten Monomeren handelt, von denen eines ein ungesättigtes Carbonsäuremonomer ist, von dem ein Teil gegebenenfalls modifiziert ist durch daran geknüpfte Gruppen bestehend aus Esteramid- und Estergruppen und wobei die Glasübergangstemperatur des von daran geknüpften Esteramid- oder Estergruppen freien Rückgratpolymeren unter 0 ° C liegt, dadurch gekennzeichnet, daß die Zusammensetzung 0,01 bis 1 Gew.%, bezogen auf das Gewicht der Polymerfeststoffe, Benzophenon oder ein nicht monoethylenisch ungesättigtes Benzophenonderivat enthält. Sind Carbonsäuremonomere, die durch Umsetzung mit einem ungesättigten Fettsäurehydroxyamid oder einem ungesättigten Fettsäureglycidylester modifiziert sind, Bestandteil der Additionspolymeren, so können diese Zusammensetzungen als Zusatzstoffe geringe Mengen an Trocknungsmitteln wie Zinksalze von Naphthensäuren enthalten. Die genannten Zusammensetzungen werden zum Spachteln, Kalfatern, Abdichten und/oder Kleben empfohlen und sind dadurch gekennzeichnet, daß unter dem Einfluß von aktinischer Strahlung ihre Oberflächenklebrigkeit relativ rasch abnimmt, was die Neigung zum Verschmutzen mindert. Nachteilig an diesen Zusammensetzungen ist jedoch, daß die Elastizität im verfestigten Zustand, insbesondere bei erhöhten Temperaturen, nicht voll zu befriedigen vermag und daß darüber hinaus die Ausführungsformen, die Additionspolymere mit ungesättigten Esteramid- oder ungesättigten Estergruppen modifizierte Carbonsäuremonomere enthalten, in nicht einfacher Weise herzustellen sind.

Eine nicht voll befriedigende Elastizität im verfestigten Zustand ist z.B. dann von Nachteil, wenn die Zusammensetzungen zum Beschichten von Risse enthaltenden Untergründen im Außenbereich eingesetzt werden sollen, da die äußeren Temperaturänderungen Schwankungen der Rißausdehnungen bewirken, was normalerweise bei nicht ausreichender Elastizität der Beschichtung im Laufe der Zeit zum Bruch derselben führt.

Die DE-A 3 800 984 betrifft Bindemittel für klebfreie, nicht schmutzende, elastische Beschichtungen auf Basis von wäßrigen Copolymer-Dispersionen, die Zinkaminkomplexsalze enthalten, dadurch gekennzeichnet, daß sie im wesentlichen aus

a) 99 bis 90 Gew.% einer (Meth)acrylsäureestercopolymer-Dispersion, deren Polymeres eine Glastemperatur von -40 bis -1 °C enthält und

b) 1 bis 10 Gew.% eines wasserlöslichen Zinkamin-Komplexsalzes einer polymeren Carbonsäure

bestehen, wobei die Angaben in Gew.% auf die gesamte Polymermenge bezogen sind. Nachteilig an diesen Bindemitteln ist, daß, insbesondere bei Anwendungen im Außenbereich, die Oberflächenklebrigkeit der resultierenden Beschichtungen, und damit verknüpft, deren Neigung zum Beschmutzen, nicht voll zu befriedigen vermag.

Der vorliegenden Erfindung lag daher die Aufgabe zugrunde, den geschilderten Nachteilen mittels besser geeigneten Zusammensetzungen abzuhelfen. Demgemäß wurden die eingangs definierten Kunstharzzubereitungen gefunden.

Als Monomere a sind insbesondere die Ester der Acryl- und Methacrylsäure geeignet. Von besonderer Bedeutung sind dabei die Ester des Methanols, Ethanols, der Propanole, der Butanole, der Pentanole, des 2-Ethylhexanols, des iso-Octanols sowie des n-Decanols und des n-Dodecanols. Als Vinylester kommen insbesondere Vinylformiat, Vinylacetat, Vinylpropionat und Vinylbutyrat in Betracht, unter denen Vinylpropionat besonders bevorzugt ist. Bevorzugte Monomere b sind $\alpha,\beta$-monoethylenisch ungesättigte Mono- oder Dicarbonsäuren wie Acrylsäure, Methacrylsäure, Ethacrylsäure, Itaconsäure, Fumarsäure und Maleinsäure sowie deren Anhydride. Darüber hinaus kommen als Monomere b auch die Halbamide von Dicarbonsäuren wie Malein-, Fumar- und Itaconsäure in Betracht sowie die Halbester dieser $\alpha,\beta$-monoethylenisch ungesättigten Dicarbonsäuren mit 1 bis 18 C-Atome enthaltenden Alkanolen. Weiterhin sind als Monomere b Vinylsulfonsäure, Vinylphosphonsäure sowie die Acrylamidoglycolsäure und die Methacrylamidoglycolsäure gut geeignet. Mit Vorteil enthalten die Kunstharze A > 1 bis 6 Gew.% der Monomeren b einpolymerisiert.

Bevorzugte Monomere c sind monoethylenisch ungesättigte Acetophenon- und Benzophenonderivate, die sowohl keine Phenylgruppe mit einer freien Hydroxylgruppe in ortho-Position zur Carbonylgruppe des Phenongrundkörpers als auch keine Phenylgruppe mit einer freien Aminogruppe in ortho- oder para-Position zur Carbonylgruppe des Phenongrundkörpers aufweisen. Unter diesen kommen insbesondere Verbindungen der allgemeinen Formel I

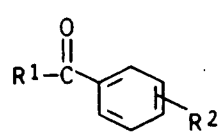

(I),

in der die Variablen folgende Bedeutung haben:

$R^1$ $-CH_3$ oder $-C_6H_5$ ,

$R^2$

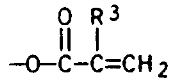

und

$R^3$ -H oder $-CH_3$ ,

in Betracht. Bevorzugt sind Verbindungen I in denen $R^1$ die Phenylgruppe ist und $R^2$ sich in para-Position zur Carbonylgruppe des Phenongrundkörpers befindet.

Außerdem kommen als solche Monomere c Verbindungen der allgemeinen Formel II

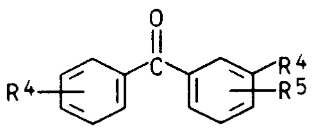 (II),

in der die Variablen folgende Bedeutung haben:

$R^4$ -H oder $-C_nH_{2n+1}$ mit n = 1 bis 4,

$R^5$ $-O-R^6$ oder

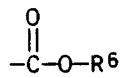

und

$R^6$

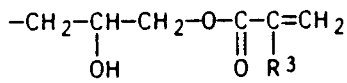 ,

in Betracht. Vorzugsweise werden die Verbindungen II eingesetzt, in denen $R^5$ die Estergruppierung ist und sich in para-Position zur Carbonylgruppe des Phenongrundkörpers befindet. Weiterhin eignen sich als Monomere c Verbindungen der allgemeinen Formel III

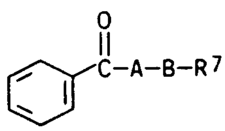 (III)

sowie Verbindungen der allgemeinen Formel IV

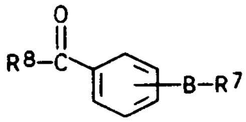 (IV),

in denen die Variablen folgende Bedeutung haben:

$R^7$

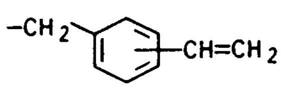 ,

| | | |
|---|---|---|
| $R^8$ | $-C_nH_{2n+1}$ mit n = 1 bis 3 oder $-C_6H_5$ , | |
| A | gesättigte oder ungesättigte Kohlenwasserstoffkette, die verzweigt sein kann, mit 1 bis 3 C-Atomen oder ein Kohlenwasserstoffring mit 3 bis 6 C-Atomen, | |
| B | -O-, | |

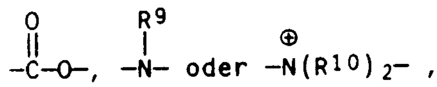

| | |
|---|---|
| $R^9$ | -H oder $-C_nH_{2n+1}$ mit n = 1 bis 8 und |
| $R^{10}$ | $-C_nH_{2n+1}$ mit n = 1 bis 4. |

Ferner eignen sich als Monomere c besonders Verbindungen der allgemeinen Formel V

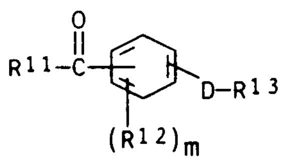

(V),

in der die Variablen folgende Bedeutung haben:

| | |
|---|---|
| $R^{11}$ | eine niedere Alkyl- oder die Phenylgruppe, wobei die Wasserstoffatome der Phenylgruppe ein- oder mehrfach durch Halogenatome, niedere Alkoxy- oder durch die Hydroxylgruppe mit der Maßgabe substituiert sein können, daß kein in ortho-Position zur Carbonylgruppe des Phenongrundkörpers befindliches Wasserstoffatom der Phenylgruppe durch eine Hydroxylgruppe ersetzt wird, |
| $R^{12}$ | Halogenatome, niedere Alkoxygruppen und/oder die Hydroxylgruppe, mit der Maßgabe, daß sich im Fall der Hydroxylgruppe $R^{12}$ nicht in ortho-Position zur Carbonylgruppe des Phenongrundkörpers befindet, |
| m | 0 bis 4, |
| D | -O-, |

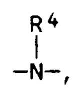

eine oxyalkylenoxy-Kette, eine carbamoylalkylenoxy-Kette oder eine alkylenoxy-Kette und

| | |
|---|---|
| $R^{13}$ | eine Alkenyl- oder eine ω-Carboxylalkenylgruppe. |

Mit besonderem Vorteil werden als Monomere c auch Verbindungen der allgemeinen Formel VI

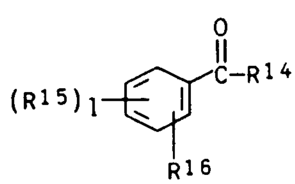

(VI),

in der die Variablen folgende Bedeutung haben:

| | |
|---|---|
| $R^{14}$ | $R^8$, oder eine Phenylgruppe, innerhalb der bis zu 1-Wasserstoffatome durch $R^{15}$ ersetzt sein können, |
| l | 0 bis 4, |
| $R^{15}$ | -H, $-CF_3$, -O-Alkyl und/oder Alkyl-COO- mit jeweils 1 bis 4 C-Atomen in der Alkylgruppe, Halogen, -CN, -COOH oder eine zur Carbonylgruppe des Phenongrundkörpers nicht orthoständige -OH-Gruppe, |
| $R^{16}$ | eine Gruppe der allgemeinen Formel VII |

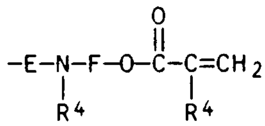

(VII),

in der die Variablen folgende Bedeutung haben:

E

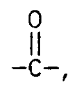, 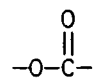 oder 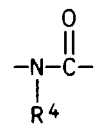

und

F eine 2 bis 12 C-Atome aufweisende Kohlenwasserstoffkette, die ein- oder mehrfach durch Sauerstoffatome unterbrochen sein kann,

eingebaut. Bevorzugte Verbindungen VI sind der Acryl- und Methacrylsäureester des Alkohols folgender Struktur

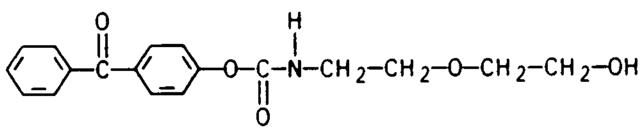

.

Ganz besonders bevorzugte Monomere c sind jedoch Verbindungen der allgemeinen Formel VIII

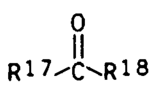

VIII,

in der die Variablen folgende Bedeutung haben:

$R^{17}$ eine 1 bis 3 C-Atome enthaltende lineare Alkylgruppe, eine 3 oder 4 C-Atome enthaltende Alkylgruppe deren Wasserstoffatome ein- oder mehrfach durch Halogenatome ersetzt sein können, eine Arylgruppe oder $R^{18}$

$R^{18}$

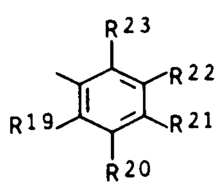

$R^{19}$ bis $R^{23}$ unabhängig voneinander $R^4$, -OH (das zur Carbonylgruppe des Phenongrundkörpers nicht ortho-ständig sein darf), $-OCH_3$, $-OC_2H_5$, -SH, $-SCH_3$, -Cl, -F, -CN, -COOH, -COO-Alkyl mit 1 bis 3 C-Atomen in der Alkylgruppe, $-CF_3$, $-N(CH_3)_2$, $-N(C_2H_5)_2$, $-N(CH_3)C_6H_5$, $-N^{\oplus}(CH_3)_3X^-$, $-N^{\oplus}(CH_3)_2X^-$ wobei $X^-$ ein Säureanion wie $Cl^{\ominus}$, $Br^{\ominus}$, $CH_3COO^{\ominus}$, $HSO_4^{\ominus}$, $H_2PO_4^{\ominus}$ oder $NO_3^{\ominus}$ sein kann, mit der Maßgabe, daß wenigstens einer der Reste $R^{19}$ bis $R^{23}$ für einen Rest der allgemeinen Formel IX

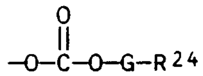 (IX)

steht, in der die Variablen folgende Bedeutung haben:

$R^{24}$

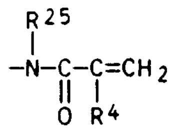 , 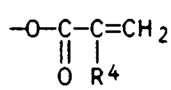 oder 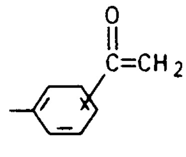 ,

$R^{25}$ $R^1$ oder $R^4$,

G $\{\{-(K)_i-J-\}_j-(K)_k\}$ und/oder $\{(-(K)_i-J-\}_j-(K)_k-J-\}_h\}$

K eine Alkylengruppe deren Wasserstoffatome ein- oder mehrfach durch Halogenatome substituiert sein können, eine 5 bis 10 C-Atome enthaltende Cycloalkylengruppe oder eine Phenylengruppe,

J -O-, -S-,

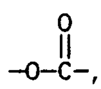, 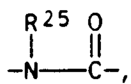, 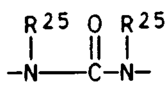 , 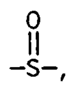, 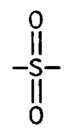 und 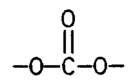

i,k 1 bis 10 und

j,h 0 bis 25,

wobei innerhalb der Verbindungen VIII die Monomeren

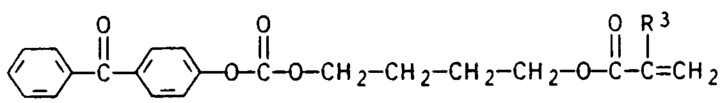 ,

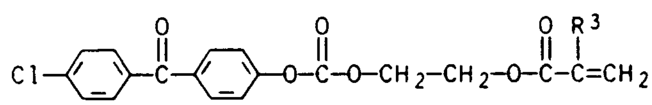 sowie

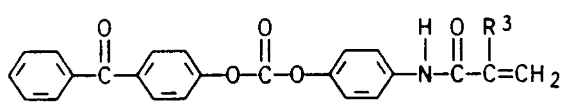

bevorzugt werden. Schießlich sei als bevorzugtes Monomer c noch das α,ω-Acryloylbutylen-(4,4'-benzoylphenyl)-carbonat genannt. Die Verbindungen der allgemeinen Formeln I bis VI sowie der allgemeinen Formel VIII sind bekannt und z.B. in den Schriften US 3 214 492 (Verbindungen I), US 3 429 852 (Verbindungen II), DE-A 28 18 763 (Verbindungen III und IV), EP-A 246 848 (Verbindungen V), in der älteren Schrift P 38 20 463.0 (Verbindungen VI) und in der älteren Schrift P 38 44 44.5 (Verbindungen VIII) beschrieben. Vorzugsweise enthalten die Kunstharze A 0,1 bis 2 Gew.% der Monomeren c eingebaut.

Als mögliche Monomere d kommen unter anderem keine Carboxylgruppen enthaltenden monoethylenisch ungesättigten Stickstoffverbindungen wie Acryl- und Methacrylamid, N-Vinylformamid, N-Vinylpyrrolidon, die Amide aus Acryl- oder Methacrylsäure und Tetrahydrofurfurylamin, Acrylnitril und Methacrylnitril sowie Ureido-Monomere wie β-Ureidoethylacrylat, β-Ureidoethylvinylether, N-Dimethylaminoethyl-N'-vinyl-N,N'-ethylenharnstoff und N-Methacrylamidomethyl-N,N'-ethylenharnstoff in Betracht.

Desweiteren eignen sich als Monomere d Acryl- oder Methacrylsäureester von Diolen, z.B. 2-Hydroxyethylacrylat oder 1,4-Butandiolmonoacrylat, sowie von Tetrahydrofurfurylalkohol, vinylaromatische Monomere wie Styrol oder Vinyltoluol, halogenhaltige Vinylmonomere wie Vinylchlorid und Vinylidenchlorid, ungesättigte Kohlenwasserstoffe wie Ethylen, Propylen, Isobuten, Butadien und Isopren sowie niedere Vinylether. Die Einsatzmengen der mehrfach ungesättigten Monomeren d, z.B. Butadien, beträgt vorzugsweise weniger als 5 Gew.%. Bevorzugt sind Monomere d, die, wie Tetrahydrofurfuryl-2-methacrylat oder Tetrahydrofurfuryl-2-acrylamid, Ether-, Ketal-, Acetal-, Aminal-, Halbaminal- oder Thioacetalgruppen enthalten, wobei Ethergruppen besonders vorteilhaft sind. Der Gewichtsanteil solcher Monomeren an den Kunstharzen A sollte in der Regel weniger als 20 Gew.% betragen. Mit Vorteil werden als Monomere d in untergeordneten Mengen, 0,01 bis 0,5 Gew.%, bezogen auf das Kunstharz A, auch Silicium enthaltende Monomere wie Vinyltriethoxysilan, 8-Methacryloxypropyltrimethoxisilan oder Vinyltris-2-methoxysilan einpolymerisiert. Ferner kommen als Monomere d die Naßhaftung verbessernde Verbindungen wie 1-(Methacryloxyethyl)-imidazolidin-2-on in Betracht.

Von besonderem Interesse sind Kunstharze A, deren Monomerenbestandteile a, b und d so bemessen sind, daß ein nur aus den Monomeren a, b und d aufgebautes Kunstharz eine Glasübergangstemperatur von -30 bis -10 °C aufweisen würde. Nach Fox (T.G. Fox, Bull.Am.Phys.Soc. (Ser. II) 1, 123 [1956]) gilt für die Glasübergangstemperatur von Mischpolymerisaten in guter Näherung:

$$\frac{1}{Tg} = \frac{X^1}{Tg^1} + \frac{X^2}{Tg^2} + \cdots\cdots \frac{X^s}{Tg^s}$$

wobei $X^1$, $X^2$, ....., $X^s$ die Massenbrüche der Monomeren 1, 2, ....., s und $Tg^1$, $Tg^2$, .....$Tg^s$ die Glasübergangstemperaturen der jeweils nur aus einem der Monomeren 1, 2, .... oder s aufgebauten Polymeren in Grad Kelvin bedeuten. Die Glasübergangstemperaturen der Monomeren a, b und d sind im wesentlichen bekannt und z.B. in J. Brandrup, E.H. Immergut, Polymer Handbook 1st Ed. J. Wiley, New York 1966 und 2nd Ed. J. Wiley, New York 1975, aufgeführt.

An sich sind die als Kunstharze A zu verwendenden Polymerisate nach den bekannten Methoden der radikalischen Substanz-, Lösungs-, Suspensions- und Emulsionspolymerisation erhältlich. Da die bevorzugte Ausführungsform der erfindungsgemäßen wäßrigen Kunstharzzubereitungen jedoch die wäßrige Dispersion ist, empfiehlt es sich, das Kunstharz A ebenfalls in dieser Form einzusetzen und demgemäß stellt man es vorzugsweise durch Polymerisation der jeweiligen Monomeren in wäßrigem Medium unter den bekannten Bedingungen der radikalischen Emulsionspolymerisation in Gegenwart von wasserlöslichen radikalbildenden Initiatoren und Emulgatoren D sowie gegebenenfalls in Gegenwart von Schutzkolloiden D und Reglern sowie weiterer Hilfsmittel her.

Als Emulgatoren D haben sich sowohl nichtionische als auch anionische Tenside bewährt. Vorzugsweise eingesetzte nichtionische Tenside sind ethoxylierte Alkanole (EO-Grad: 2 bis 100, Alkylrest: $C_8$ bis $C_{36}$), ethoxylierte mono-, di- oder tri-Alkylphenole oder -naphthole (EO-Grad: 2 bis 100, Alkylrest: $C_4$ bis $C_{36}$) und ethoxylierte aliphatische Monocarbonsäuren (EO-Grad: 6 bis 50, Alkylrest: $C_8$ bis $C_{24}$).

Besonders bevorzugte nichtionische Emulgatoren sind solche der allgemeinen Formel X

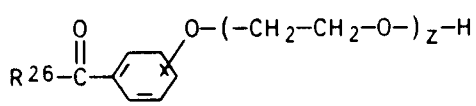

(X)

in der die Variablen folgende Bedeutung haben:

- z 1 bis 200
- $R^{26}$ $R^1$ oder eine durch geradkettige oder verzweigte Alkylgruppen mit 1 bis 18 C-Atomen substituierte Phenylgruppe.

In vorteilhafter Weise eingesetzte anionische Tenside sind die Alkalimetallsalze der sulfatierten Derivate von 6 bis 18 C-Atome enthaltenden Alkanolen, ethoxylierten Alkanolen (EO-Grad: 4 bis 30, Alkylrest: $C_{12}$ bis $C_{18}$) und von ethoxylierten Alkylphenolen (EO-Grad: 4 bis 30, die Alkalimetall- und Ammoniumsalze höherer Fettsäuren sowie die Alkalimetallsalze von 12 bis 18 C-Atome enthaltenden Alkylsulfonsäuren. Weiterhin kommen die Alkalimetallsalze von Alkylarylsulfonsäuren sowie von disulfonierten Alkyldiphenoloxiden (Alkyl-

rest: $C_{10}$ bis $C_{18}$) in Betracht. Als Schutzkolloide D können z.B. hochmolekulare Verbindungen wie Polyvinylalkohole, Polyvinylpyrrolidone, Cellulosederivate, Polyacrylamide, Polymethacrylamide, Polycarbonsäuren oder deren Alkalimetall- oder Ammoniumsalze eingesetzt werden. Das zahlenmittlere Molekulargewicht $\overline{M}_z$ dieser Schutzkolloide beträgt vorzugsweise $2 \cdot 10^4$ bis $10^5$.

Geeignete Polymerisationsinitiatoren sind vor allem anorganische Peroxide wie Wasserstoffperoxid oder Alkalimetallperoxidisulfate. Ferner eignen sich Azoverbindungen wie 2,2'-Azobisisobutyronitril, 2,2'-Azobis-(methylisobutyrat), 2,2'-Azobis(2,4-dimethylvaleronitril), 2,2'-Azobis(4-methoxy-2,4-dimethylvaleronitril), 2,2'-Azobis(N,N'-dimethylenisobutyramidin)dihydrochlorid, 2,2'-Azobis(2-amidinopropan)dihydrochlorid oder 4,4'-Azobis(4-cyanvaleriansäure). Weiterhin kommen organische Acylperoxide wie Dibenzoylperoxid, Dilauroylperoxid, Didecanoylperoxid und Di-iso-nonanoylperoxid,Alkylperester wie t-Butylperpivalat, t-Butyl-per-2-ethylhexanoat, t-Butylpermaleinat, t-Butylperacetat und t-Butylperbenzoat, Hydroperoxide wie t-Butylhydroperoxid, kombinierte Systeme, die aus wenigstens einem organischen Reduktionsmittel und wenigstens einem Peroxid und/oder Hydroperoxid zusammengesetzt sind, z.B. t-Butylhydroperoxid und das Na-Salz der Hydroxymethansulfinsäure, sowie kombinierte Systeme die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Natriumperoxidisulfat in Betracht, wobei an Stelle von Ascorbinsäure auch häufig das Na-Salz der Hydroximethansulfonsäure, Natriumsulfit, Natriumhydrogensulfit oder Natriummetabisulfit eingesetzt werden.

Die Emulsionspolymerisationstemperatur und die verwendete Menge an Polymerisationsinitiatoren wird in an sich bekannter Weise so bemessen, daß ein gewichtsmittleres Molekulargewicht $\overline{M}_w$ des dispergierten Kunstharzes A von $5 \cdot 10^4$ bis $2 \cdot 10^6$, vorzugsweise von $2 \cdot 10^5$ bis $10^6$ erhalten wird. In der Regel beträgt die Emulsionspolymerisationstemperatur 30 bis 90, vorzugsweise 45 bis 85 °C und die Polymerisationsinitiatoren werden üblicherweise in Mengen, bezogen auf die Gesamtmenge an Monomeren, von 0,1 bis 10 Gew.% eingesetzt. Zur Einstellung des Molekulargewichtes können gegebenenfalls zusätzlich Molekulargewichtsregler, üblicherweise in Mengen von 0,1 bis 5 Gew.%, bezogen auf die Gesamtmenge an Monomeren, z.B. Alkohole wie Butendiol oder iso-Propanol, oder Mercaptoverbindungen wie Mercaptobernsteinsäure oder Haloformverbindungen wie Bromoform oder Chloroform zugesetzt werden.

Die eingesetzte Menge an Dispergiermitteln D, Emulgatoren und/oder Schutzkolloiden, bestimmt im wesentlichen den mittleren Durchmesser der resultierenden dispergierten Kunstharzteilchen sowie die Stabilität der Dispersion. Normalerweise beträgt ihr Gewichtsanteil, bezogen auf das Gesamtgewicht der Monomeren, 0,05 bis 10 Gew.%.

Die Emulsionspolymerisation zur Herstellung des Kunstharzes A kann sowohl als Chargenprozeß als auch in Form eines Zulaufverfahrens, einschließlich Stufen oder Gradientenfahrweise, durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen einer oder mehrere die Monomeren in reiner oder in emulgierter Form enthalten, kontinuierlich, stufenweise oder unter Überlagerung eines Konzentrationsgefälles zuführt. Der Feststoffgehalt der so erhältlichen, wenigstens ein Kunstharz A in Anwendung von Dispergiermittel D in dispergierter Form enthaltenden, wäßrigen Ausgangsdispersionen beträgt vorzugsweise 30 bis 60, besonders bevorzugt 45 bis 55 Gew.%.

Als Ausgangselement für metallische Kationen der Ladungszahl 2 bis 4 (Komponente B) kommen insbesondere Erdalkalimetalle, Aluminium, Zink, Zinn, Cadmium, Eisen, Cobalt, Kupfer, Nickel, Titan, Mangan, Vanadin oder Zirkonium in Betracht, unter denen das Zink ganz besonders bevorzugt ist.

Das Einbringen der Kationen B in die erfindungsgemäßen wäßrigen Kunstharzzubereitungen erfolgt im allgemeinen dadurch, daß man eine die metallische Komponente enthaltende Verbindung, in reiner Form oder in einem geeigneten Lösungsmittel, z.B. Wasser oder niedere Alkohole, gelöst, in eine wenigstens ein Kunstharz A enthaltende wäßrige Ausgangsdispersion einarbeitet, z.B. einrührt, wobei die Verbindungen bevorzugt sind, die eine relativ gute Wasserlöslichkeit aufweisen. Beispiele hierfür sind die Salze anorganischer oder organischer Säuren wie die Formiate, Acetate, Sulfate, Sulfite, Nitrate oder Hydroxide. Aber auch die in Wasser weniger löslichen Oxide, Carbonate und Hydrogencarbonate sind geeignet, insbesondere wenn sie in schwach saure Ausgangsdispersionen eingearbeitet werden. Allgemein ist dabei darauf zu achten, daß einerseits die metallischen Komponenten durch bei der Emulsionspolymerisation von A zugesetzte Hilfsmittel nicht ausgefällt werden und andererseits die Zugabe der metallischen Komponente keine Koagulatbildung in der Dispersion verursacht. Um die Fällung der metallischen Komponente zu verhindern, setzt man vorzugsweise Komplexbildner ein. Beispiele für geeignete Komplexbildner sind Alkalimetallsalze der Oxalsäure, Weinsäure, Citronensäure, Pyrophosphorsäure oder Ethylendiamintetraeessigsäure, Aminosäuren wie Alanin, Glycin, Valin, Norvalin, Leucin, Norleucin, N-Methylaminoessigsäure, N-Ethylaminoessigsäure, N-Phenylaminoessigsäure, Nicotinsäure oder niedermolekulare Polyacryl- oder -methacrylsäuren und ganz besonders bevorzugt Ammoniak.

Mit Vorteil werden die Kationen bereits in Form von Salzen der vorgenannten komplexbildenden Säuren zugegeben (Metallchelate). Weitere geeignete Metallchelate sind Metallacetylacetonate wie Al(III)-acetylacetonat, Cr(III)-acetylacetonat, Zink(II)-acetylacetonat oder Titan(IV)-acetylacetonat sowie Titan(IV)säureester wie Tetramethylorthotitanat oder Tetraethylorthotitanat. Zn(II) wird vorzugsweise als wäßrige ammoniakalische Zn(II)-ammoniumhydrogencarbonat-Lösung eingearbeitet. Die Zugabe der metallischen Komponente B in komplexer Bindung mindert gleichzeitig die Neigung der Dispersion zu koagulieren. Letzteres läßt sich insbesondere auch dadurch vermeiden, daß man zur Herstellung der wenigstens ein Kunstharz A enthaltenden Ausgangsdispersion vorzugsweise nichtionische Emulgatoren oder Schutzkolloide anwendet. Besonders bevorzugt sind in diesem Zusammenhang ethoxylierte Alkanole (EO-Grad: 10 bis 30, Alkylrest: $C_8$ bis $C_{16}$), ethoxylierte mono-Alkylphenole (EO-Grad: 10 bis 30, Alkylrest: linear $C_{12}$ bis $C_{18}$) sowie als Schutzkolloide Hydroxyethylcellulosen, Polyvinylalkohole oder Polyvinylpyrrolidone. Die vorzugsweise eingesetzten Mengen dieser Dispergierhilfsmittel betragen, bezogen auf die Gesamtmenge der Monomeren, 2 bis 4 Gew.%. Eine andere Möglichkeit zur Erhöhung der Stabilität der wenigstens ein Kunstharz A enthaltenden wäßrigen Ausgangsdispersionen, die vorzugsweise angewendet wird, besteht in der Erhöhung des pH-Wertes des Dispersionsmediums auf pH 6 bis 12, durch Zugabe von Ammoniak oder Aminen wie niederen primären, sekundären oder tertiären Alkylaminen oder cyclischen Aminen wie Morpholin sowie von Hydroxiden wie Alkalihydroxiden, wobei Ammoniak besonders bevorzugt verwendet wird. In anwendungstechnisch vorteilhafter Weise wird die Gesamtmenge der Kationen B so bemessen, daß sie die 0,5- bis 2-fache Menge der zur in Form der Monomeren II in das Kunstharz A eingebauten Menge an Säurefunktionen entsprechenden Menge ihrer konjugierten Basen zu neutralisieren vermag, wobei der Äquivalenzbereich (Neutralisation der 1-fachen Menge) besonders bevorzugt wird.

Als monoethylenisch ungesättigte Acetophenon- oder Benzophenonderivate, Komponente C, haben sich unter anderem Verbindungen der allgemeinen Formel XI

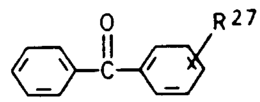 (XI)

bewährt, in der $R^{27}$ 4-$CH_3$, 4-OH, 4-$NH_2$, 4-Cl, 4-COOH, 4-$COOCH_3$, 2-COOH, 2-$COOCH_3$, 2-$NH_2$, 2-OH, 3-$NO_2$, 3-COOH oder 3-$COOCH_3$ sein kann. Bevorzugt sind Verbindungen XI in denen $R^{27}$ für 4-$CH_3$, 4-OH, 4-$NH_2$, 4-Cl, 4-COOH oder 4-$COOCH_3$ steht. Ferner eignen sich Verbindungen wie

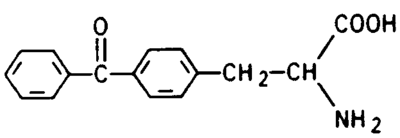 , 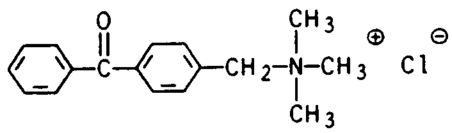 ,

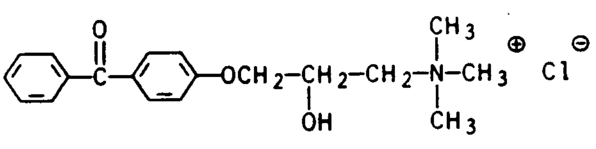 , 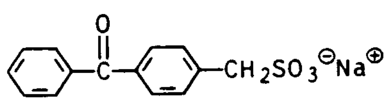

und 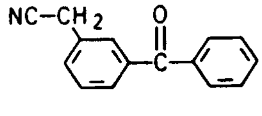 .

Diese Verbindungen sind allgemein bekannt und unter anderem z.B. bei den Firmen Shell Feinchemikalien, D-6236 Eschborn, Riedel de Haen AG; D-3016 Seelze 1, International Bio-Synthetics Ltd., GB-Halebank Widnes Chesire WA8 8NS oder Aldrich Chemie GmbH, D-7924 Steinheim erhältlich.

Besonders bevorzugt wird Benzophenon eingesetzt, wobei bei Raumtemperatur flüssige Mischungen aus Benzophenon und geeigneten Hilfssubstanzen anwendungstechnisch besonders vorteilhaft sind. Beispiele für derartige Gemische sind 2,4,6-Trimethylbenzophenon/Benzophenon im molaren Verhältnis 1,3:1

bis 1:1 oder 1-Hydroxycyclohexylphenylketon/Benzophenon im molaren Verhältnis 1:1. Derartige Mischungen sind u.a. in der EP-A 209 831 beschrieben.

Die Komponente C wird zweckmäßigerweise durch Einrühren, vorzugsweise unter Erwärmen, in eine wenigstens ein Kunstharz A enthaltende wäßrige Ausgangsdispersion eingearbeitet. Anwendungstechnisch ist jedoch das Einpolymerisieren von Monomeren c in die Kunstharze A gegenüber einer Einarbeitung von Komponenten C in die erfindungsgemäßen Kunstharzzubereitungen bevorzugt, da durch das Einpolymerisieren eine homogenere Verteilung der Phenonverbindungen erreicht wird, die von äußeren Einflüssen wie z.B. Temperatur im wesentlichen unabhängig ist und die auch während und nach der Verfilmung der erfindungsgemäßen wäßrigen Kunstharzzubereitungen im wesentlichen erhalten bleibt.

Als Bestandteil F der erfindungsgemäßen Kunstharzzubereitungen werden mit Vorteil Aluminiumsilicate, Quarz, gefällte oder pyrogene Kieselsäure (die hydrophobiert sein kann), Leicht- und Schwerspat, Talcum, Dolomit, Calciumcarbonat, Bariumsulfat, Hornblende oder Wollastonit eingesetzt. Weiterhin kommen als Komponente F farbgebende Pigmente in Betracht. Als Weißpigmente werden bevorzugt Titanweiß, Bleiweiß, Zinkweiß, Lithopone und Antimonweiß, als Schwarzpigmente Eisenoxidschwarz, Manganschwarz, Cobaltschwarz, Antimonschwarz und Ruß, als Buntpigmente z.B. Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb einsetzt.

Üblicherweise werden die Füllstoffe in feiner Körnung angewendet. Die durchschnittliche Korngröße, als arithmetisches Mittel der jeweils größten Durchmesser, beträgt bevorzugt 0,5 bis 200 $\mu$m. Die Füllstoffe können jedoch auch als Granulat mit einer durchschnittlichen Korngröße von 0,1 bis 10 mm zugesetzt werden, z.B. bei einer Verwendung der erfindungsgemäßen Zubereitungen als Putze. Ferner können als feinteilige Füllstoffe aber auch faserförmige Materialien wie Cellulosefasern, Polyacrylnitrilfasern oder Stapelfasern aus Polyamid verwendet werden. Zur Herstellung der erfindungsgemäßen wäßrigen Kunstharzzubereitungen werden die Füllstoffe F in der Regel als letzter Bestandteil in bereits die Komponenten A bis E enthaltende Kunstharzdispersionen eingerührt.

Zusätzlich können die erfindungsgemäßen Zubereitungen in untergeordneten Mengen übliche Hilfsmittel wie Konservierungsmittel, z.B. Chloracetamid oder Benzthiazolinon, Entschäumer, z.B. auf der Basis von Estern höherer Fettsäuren, modifizierten Siliconen oder Mineralölen, Filmbildehilfsmittel wie z.B. Testbenzin (Sdp. 180 bis 200 °C) oder Ester der Glutar-, Adipin- und Bernsteinsäure mit iso-Butanol, Verdickungsmittel, z.B. auf der Basis von Celluloseethern wie Methylcellulosen, Hydroxyethylcellulosen oder Methylhydroxypropylcellulosen, oder auf der Basis von Polyurethanen, pH-puffernd und enthärtend wirkende Mittel wie die Alkalimetallsalze von Polyphosphorsäuren, Verlaufshilfsmittel wie Polyethylenwachsdispersionen oder Diglycol-di-n-butylether oder Pigmentverteiler wie Alkalimetall- oder Ammoniumsalze von Polyacrylsäuren mit einem zahlenmittleren Molekulargewicht $\overline{M}_z$ von etwa $2 \cdot 10^4$ enthalten.

Der pH-Wert der fertigen erfindungsgemäßen wäßrigen Kunstharzzubereitungen beträgt vorzugsweise 6 bis 12, wobei zum Einstellen des pH-Wertes zweckmäßigerweise die gleichen basischen Mittel eingesetzt werden wie zum Einstellen des pH-Wertes der wenigstens ein Kunstharz A enthaltenden Ausgangsdispersion, also bevorzugt Ammoniak.

Die erfindungsgemäßen wäßrigen Kunstharzzubereitungen sind dadurch gekennzeichnet, daß einerseits ihre Oberflächenklebrigkeit beim und nach dem Verfilmen, insbesondere unter dem Einfluß von aktinischer Strahlung, z.B. Sonnenlicht bei Anwendungen im Außenbereich, in erhöhtem Ausmaß abnimmt, was die Neigung zum Verschmutzen mindert, und daß sie andererseits im verfestigten Zustand trotzdem gleichzeitig eine erhöhte Elastizität aufweisen. Bemerkenswerterweise zeigen die erfindungsgemäßen Zubereitungen jedoch auch in Abwesenheit von aktinischer Strahlung beim Verfilmen bereits eine erhöhte Abnahme der Oberflächenklebrigkeit.

Ferner ist von Interesse, daß die Elastizität der in Abwesenheit von aktinischer Strahlung durch alleiniges Verflüchtigen des Dispergiermediums erhältlichen Verfilmungen unter dem Einfluß von aktinischer Strahlung noch zunimmt.

Ein weiteres wesentliches Merkmal der erfindungsgemäßen Zubereitungen ist, daß ihre Elastizität im verfestigten Zustand als Funktion der Zeit unter den üblichen Umwelteinflüssen im wesentlichen erhalten bleibt, was in besonderem Ausmaß für Zubereitungen gilt, die Buntpigmente enthalten und sich durch im wesentlichen konstante Reißdehnungswerte der verfestigten Beschichtungen ausweist. Ferner weisen die Verfilmungen eine erhöhte Wasserbeständigkeit auf.

Die erfindungsgemäßen Zubereitungen eignen sich daher insbesondere zum Beschichten, Kleben, Dichten oder Imprägnieren von Substraten unterschiedlichsten Materials wie textile Gewebe, Gewebe aus Fiberglas, Artikel aus Kunststoffen wie Polyvinylchlorid, Polyvinylidenchlorid, Polystyrol, Polyacrylnitril oder Celluloseacetat, aus Glas, Metall, Beton, Asbestzement, Stein, Sand, Stahl, Leder, Holz, Keramik oder Schiefer.

Weiterhin wurde gefunden, daß die erfindungsgemäßen Zubereitungen besonders gut als Anstrichmittel für Wände, Böden und Decken, als Markierungsfarben für Wege und Straßen sowie als Putze geeignet sind, wobei sie eine dauerhafte Rißüberbrückung gewährleisten.

Beispiele

Im folgenden sind Prozente Gewichtsprozente.

Beispiel 1

Nachweis erhöhter Elastizität und reduzierter Oberflächenklebrigkeit der erfindungsgemäßen Kunstharzzubereitungen

Ein Monomerengemisch aus 71 g n-Butylacrylat, 24 g Methylmethacrylat, 2,5 g Acrylnitril und 2,5 g Acrylsäure wurden mit 1,5 g Na-Salz des disulfonierten Dodecyldiphenyloxids und 1 g eines Gemisches aus ethoxylierten $C_{12}$ bis $C_{14}$-Alkanolen (EO-Grad: 20) in 100 g wasser emulgiert.

Anschließend wurden 10 % der wäßrigen Emulsion mit 10 % einer wäßrigen Lösung von 0,5 g Natriumperoxidisulfat in 10 g Wasser versetzt und unter Rühren auf die Emulsionspolymerisationstemperatur von 85°C erhitzt. Anschließend wurden unter Aufrechterhaltung der Polymerisationstemperatur und Rühren im Verlauf von 2 h die verbliebene Menge der wäßrigen Emulsion und dazu synchron im Verlauf von 2,25 h die verbliebene Menge der wäßrigen Initiatorlösung über getrennte Zuläufe kontinuierlich zugeführt. Nach beendeter Initiatorzufuhr wurde noch 1 h nachpolymerisiert.

In eine Hälfte (V1) der so erhältlichen, ca. 50 %igen wäßrigen Kunstharzdispersion wurde 1 g Benzophenon und in die andere Hälfte (B1) wurden 1 g Benzophenon und 4 g einer ammoniakalischen wäßrigen $[Zn(NH_3)_4](HCO_3)_2$-Lösung, deren Zn-Gehalt 16 % betrug, eingerührt. Anschließend wurden die beiden Kunstharzzubereitungen in einer Breite von 8 mm, einer Länge von 100 mm und einer Trockenschichtdicke von 0,5 mm auf eine Glasplatte aufgetragen und 24 h getrocknet (Normalbedingungen). Danach wurde durch Tasten mit der Hand die Oberflächenklebrigkeit geprüft und gemäß DIN 53 230 beurteilt (0 = bestmöglicher Wert, 5 = geringstmöglicher Wert). Die Ergebnisse zeigt Tabelle 1.

Anschließend wurden die gebildeten Filme von der Glasplatte abgezogen und nach A. Zosel, "Research on the Properties of cured films of aqueous dispersions of polymers" in Double Liaison-Chimie des Peintures - No. 384, Oktober 1987, bei -30 und 50°C das Elastizitätsmodul (E′ [N/mm²]) bestimmt. Die Ergebnisse zeigt ebenfalls Tabelle 1. Danach wurden die Verfilmungen wiederholt und die gebildeten Filme mit einer Geschwindigkeit von 1 m/min im Abstand von 15 cm unter einem Quecksilbermitteldruckstrahler (120 W/cm) durchgeführt und anschließend, wie beschrieben, Oberflächenklebrigkeit und Elastizitätsmodul bestimmt. Die Ergebnisse enthält Tabelle 1.

Tabelle 1

| | | E′ (N/mm²) | | Oberflächenklebrigkeit (bewertet nach DIN 53230) |
|---|---|---|---|---|
| | | -30°C | 50°C | |
| ohne UV-Bestrahlung | B1 | 2000 | 1,6 | 3,5 |
| | V1 | 2000 | 0,42 | 5 |
| mit UV-Bestrahlung | B1 | 2300 | 1,8 | 1 |
| | V1 | 2000 | 0,45 | 4 |

Beispiel 2

Untersuchung von erfindungsgemäßen Anstrichzubereitungen sowie Putzen und Vergleichsbeispiele

a) Ausgangsdispersionen (ihr Kunstharzgehalt betrug in allen Fällen ca. 50 Gew.%)

D1: Ein Gemisch aus 200 g Wasser, 15 g Zulauf 1, 10 g Zulauf 2 und 5 g Zulauf 3 wurde auf die Polymerisationstemperatur von 45°C erhitzt und anschließend unter Aufrechterhaltung der

Polymerisationstemperatur und Rühren innerhalb von 2 h mit der verbliebenen Menge Zulauf 1 und dazu synchron innerhalb von 2,25 h mit den verbliebenen Mengen der Zuläufe 2 und 3 über räumlich getrennte Zuführungen kontinuierlich versetzt. Nach beendeter Zufuhr wurde 1 h nachpolymerisiert und danach wurden unter Erwärmen auf 60 °C 2,5 g Benzophenon sowie nach Abkühlen auf Raumtemperatur 48 g einer ammoniakalischen wäßrigen Zinksalzlösung eingerührt.

Zulauf 1:

Wäßrige Emulsion aus 250 g n-Butylacrylat, 175 g 2-Ethylhexylacrylat, 75 g Styrol, 15 g Acrylsäure, 6,25 g Acrylamid (als 50 %ige wäßrige Lösung), 7,5 g Emulgator I = ein Gemisch aus Natriumdodecyl- und Natriumtetradecylsulfat (als 20 %ige wäßrige Lösung), 6,2 g Emulgator II = ein Gemisch aus ethoxylierten $C_{12}$- bis $C_{14}$-Alkanolen, EO-Grad: 22 (als 20 %ige wäßrige Lösung) und 137 g Wasser.

Zulauf 2:

Lösung von 3,6 g t-Butylhydroperoxid in 100 g Wasser

Zulauf 3:

Lösung von 1,5 g des Na-Salzes der Hydroxymethansulfinsäure in 40 g Wasser

Zinksalzlösung:

11 g zinkoxid und 11 g Ammoniumhydrogencarbonat gelöst in 28 g einer 25 %igen Ammoniaklösung

VD1: Wie D1, jedoch ohne Benzophenon

D2: Wie D1, jedoch ohne Beteiligung eines Zulaufs 3, die Polymerisationstemperatur betrug 85 °C, es wurde kein Benzophenon zugerührt und die Zuläufe 1 und 2 wiesen folgende Zusammensetzung auf:

Zulauf 1:

Wäßrige Emulsion aus 225 g n-Butylacrylat, 185 g 2-Ethylhexylacrylat, 90 g Styrol, 15 g Acrylsäure, 6,25 g Acrylamid (als 50 %ige wäßrige Lösung), 2,5 g $\alpha,\beta$-Acryloylbuten-(4,4'-benzoylphenyl)-carbonat, 6,25 g Emulgator III = ethoxyliertes t-Octylphenol, EO-Grad: 25 (als 20 %ige wäßrige Lösung) und 199 g Wasser.

Zulauf 2:

Lösung von 2,5 g Natriumperoxidisulfat in 100 g Wasser

D3: Wie D1, jedoch ohne Beteiligung eines Zulaufs 3. Es wurden 5 g Benzophenon eingearbeitet, die Polymerisationstemperatur betrug 85 °C und die Zuläufe 1 und 2 wiesen folgende Zusammensetzung auf:

Zulauf 1:

Wäßrige Emulsion aus 225 g n-Butylacrylat, 185 g 2-Ethylhexylacrylat, 90 g Styrol, 6,25 g Acrylamid (als 50 %ige wäßrige Lösung), 15 g Acrylsäure, 10 g Tetrahydrofurfuryl-2-acrylat, 7,5 g Emulgator I, 6,2 g Emulgator II und 186 g Wasser.

Zulauf 2:

Wie bei D2

VD2: Wie D3, jedoch ohne Benzophenon

D4: Wie D3, jedoch wies Zulauf 1 folgende Zusammensetzung auf:

Zulauf 1:

Wäßrige Emulsion aus 415 g 2-Ethylhexylacrylat, 60 g Methylmethacrylat, 25 g Styrol, 5 g Acrylsäure, 7,5 g Emulgator I, 6,2 g Emulgator II und 161 g Wasser.

D5: Wie D1, jedoch wurde ein Gemisch aus 200 g Wasser, 30 g Zulauf 1 und 5 g zulauf 3 vorgelegt, bei 85 °C polymerisiert, der verbliebene Zulauf 1 in 1,25 h, Zulauf 2 in 0,45 h und der verbliebene Zulauf 3 in 2,25 h zugeführt, 5 g Benzophenon und 10 g Zinksalzlösung eingerührt. Die Zuläufe wiesen folgende Zusammensetzung auf:

Zulauf 1:

Emulsion aus 227,5 g n-Butylacrylat, 10 g Acrylsäure, 65 g Methylmethacrylat, 0,8 g Emulgator I (als 40 %ige wäßrige Lösung), 4 g Emulgator III (als 20 %ige wäßrige Lösung), 0,8 g Emulgator IV = Na-Salz des sulfatierten ethoxylierten t-Octylphenols, EO-Grad: 25 (als 35 %ige wäßrige Lösung) und 108 g Wasser.

Zulauf 2:

78,7 g n-Butylacrylat, 63,2 g Methylmethacrylat, 50,0 g Styrol, 25,6 g 1-(Methacroyloxiethyl)-imidazolidin-2-on als 39 %ige Lösung in Methylmethacrylat, 0,4 g Emulgator I (als 40 %ige wäßrige Lösung), 2,2 g Emulgator III (als 20 %ige wäßrige Lösung), 0,4 g Emulgator IV (als 35 %ige wäßrige Lösung), 15 g Butendiol-1,4, 25 g einer 5 %igen wäßrigen Lösung einer

Hydroxyethylcellulose und 76 g Wasser.
Zulauf 3:
wie Zulauf 2 bei D2

D6: Wie D1, jedoch ohne Beteiligung eines Zulaufs 3. Die Polymerisationstemperatur betrug 85 °C, es wurden 5 g Benzophenon und 15 g Zinksalzlösung eingerührt, wobei zusätzlich zur Zinksalzlösung 15 g 25 %ige wäßrige Ammoniaklösung zugerührt wurden und die Zuläufe 1 und 2 wiesen folgende Zusammensetzungen auf:
Zulauf 1:
Emulsion aus 240 g Styrol, 210 g n-Butylacrylat, 50 g 2-Ethylhexylacrylat, 9 g Acrylsäure, 6 g Acrylamid (als 50 %ige wäßrige Lösung), 7,5 g Emulgator IV (als 20 %ige wäßrige Lösung), 7,5 g Emulgator III (als 20 %ige wäßrige Lösung) und 166 g Wasser.
Zulauf 2:
Wie bei D2

VD3: Wie D6, jedoch ohne Benzophenon

b) Oberflächenklebrigkeit und zeitabhängiges Verhalten der Reißdehnung von Fassadenfarben

Unter Verwendung der Ausgangsdispersionen D1 bis D3 sowie VD1 und VD2 wurden Fassadenfarben folgender allgemeiner Zusammensetzung hergestellt:
130 g Ausgangsdispersion
0,15 g Tetranatriumpyrophosphat (als 25 %ige wäßrige Lösung)
0,6 g Chloracetamid
0,4 g 25 %ige wäßrige Ammoniaklösung
0,8 g Entschäumer auf Siliconbasis
7 g Wasser
0,4 g Ammoniumsalz einer Polyacrylsäure mit $\overline{M}_Z = 2 \cdot 10^4$
7 g Titanweiß (mittlere Korngröße 1 µm)
8 g Talcum (mittlere Korngröße 5 µm)
40 g Calciumcarbonat (mittlere Korngröße 5 µm)
1 g Siliciumdioxid (mittlere Korngröße 1 µm)
2 g Testbenzin (Sdp. 180 °C) und
1,6 g eines Gemisches von Estern der Adipin-, Glutar- und Bernsteinsäure mit iso-Propanol
Anschließend wurden zunächst jeweils 300 g/m$^2$ der Fassadenfarben auf eine Faserzementplatte aufgestrichen und 6 h bei Normalbedingungen getrocknet. Danach wurde der Aufstrich in derselben Menge wiederholt, 24 h bei Normalbedingungen getrocknet und sodann durch Tasten mit der Hand die Oberflächenklebrigkeit der Beschichtungen geprüft und nach DIN 53 230 beurteilt.

Anschließend wurden die beschichteten Faserzementplatten 1 Woche unter einem Neigungswinkel von 45 ° nach Süden dem Sonnenlicht ausgesetzt und die Prüfung der Oberflächenklebrigkeit wiederholt. Die Ergebnisse enthält Tabelle 2. Weiterhin wurden von den die Ausgangsdispersionen D1 bis D3 enthaltenden Fassadenfarben durch 24 h dauernde Trocknung unter Normalbedingungen Verfilmungen hergestellt und nach DIN 53 455 bei -10 °C von diesen Verfilmungen die Reißdehnung (%) bestimmt. Diese Prüfung wurde an Verfilmungen wiederholt, die darüberhinaus 3 Wochen der Außenwitterung ausgesetzt waren. Die Ergebnisse enthält ebenfalls Tabelle 2.

Tabelle 2

| | Ausgangsdispersionen | | | | |
|---|---|---|---|---|---|
| | D1 | VD1 | D2 | D3 | VD2 |
| Oberflächenklebrigkeit nach 24 h | 1 | 2 | 1 | 1 | 2 |
| Oberflächenklebrigkeit nach 1 Woche Sonne | 0 | 2 | 0,5 | 0 | 2 |
| Reißdehnung (-10 °C) nach 24 h [%] | 70 | | 80 | 70 | |
| Reißdehnung (-10 °C) nach 3 Wochen Außenbewitterung [%] | 63 | | 74 | 65 | |

c) Zeitabhängiges Verhalten der Reißdehnung einer Flachdachbeschichtung

Unter Verwendung der Ausgangsdispersion D4 wurde folgende Zubereitung zur Flachdachbeschichtung hergestellt:
55,5 g D4
3,5 g Titanweiß (mittlere Korngröße 1 µm)
27,7 g Calciumcarbonat (mittlere Korngröße 5 µm)
10,4 g Bariumsulfat (mittlere Korngröße 1 µm)
1,5 g einer 5 %igen Polyurethanverdickerlösung und
1,4 g eines Entschäumers auf der Basis einer Stearinsäureesters
Die Zubereitung wurde wie unter b) verfilmt und die Reißdehnung der Verfilmung bestimmt. Die Ergebnisse zeigt Tabelle 3.

Tabelle 3

| | |
|---|---|
| Reißdehnung (-10 °C) nach 24 h [%] | 180 |
| Reißdehnung (-10 °C) nach 3 Wochen Außenbewitterung [%] | 165 |

d) Zeitabhängiges Verhalten der Reißdehnung einer weißen Holzhausfarbe

Unter Verwendung der Ausgangsdispersion D5 wurde folgende Holzhausfarbe hergestellt:
563 g D5
72 g Wasser
1,5 g Tetranatriumpyrophosphat (als 10 %ige wäßrige Lösung)
1,2 g Ammoniumsalz einer Polyacrylsäure mit $\overline{M}_Z = 2 \cdot 10^4$
5 g Testbenzin (Sdp. 180 °C)
2 g Chloracetamid
1 g 5 %ige wäßrige Lösung von Hydroxyethylcellulose
7 g Entschäumer auf Siliconbasis
24 g Talcum (mittlere Korngröße 5 µm)
116 g Calciumcarbonat (mittlere Korngröße 5 µm)
173 g Titanweiß (mittlere Korngröße 1 µm)
0,7 g 25 %ige wäßrige Ammoniaklösung
6,7 g einer 35 % igen Polyurethanverdickerlösung und
13,4 g Diglycol-di-n-butylether
Die Zubereitung wurde wie unter b) verfilmt und die Reißdehnung der Verfilmung bestimmt. Das Ergebnis zeigt Tabelle 4.

Tabelle 4

| | |
|---|---|
| Reißdehnung (-10 °C) nach 24 h [%] | 100 |
| Reißdehnung (-10 °C) nach 3 Wochen Außenbewitterung [%] | 95 |

e) Oberflächenklebrigkeit von Spachtelputzen

Unter Verwendung der Ausgangsdispersionen D6 und VD3 wurde folgende Zubereitung als Spachtelputz hergestellt:
170 g Ausgangsdispersion
21 g 3 %ige wäßrige Lösung von Methylhydroxypropylcellulose
2,5 g Tetrakaliumpyrophosphat (als 50 %ige wäßrige Lösung)
3 g Polyethylenwachsdispersion
4 g Entschäumer auf Mineralölbasis
2 g Benzthiazolinon
20 g Testbenzin (Sdp. 180 °C)

20 g eines Gemisches von Estern der Adipin-, Glutar- und Bernsteinsäure mit iso-Propanol
32 g Titanweiß (mittlere Korngröße 1 µm)
267 g Calciumcarbonat (mittlere Korngröße 40 µm)
77 g Calciumcarbonat (mittlere Korngröße 130 µm)
79 g Aluminiumsilicat (mittlere Korngröße 5 µm)
300 g Calciumcarbonatgranulat (mittlere Korngröße 3 µm)
Anschließend wurde der Spachtelputz auf eine Faserzementplatte aufgetragen und wie in b) getrocknet sowie die Oberflächenklebrigkeit bestimmt. Die Ergebnisse zeigt Tabelle 5.

Tabelle 5

| | Ausgangsdispersion | |
|---|---|---|
| | D6 | VD3 |
| Oberflächenklebrigkeit nach 1 Woche Sonne | 1 | 3 |

**Patentansprüche**

1. Wäßrige Kunstharzzubereitungen, im wesentlichen enthaltend
   A) 3 bis 75 Gew.% wenigstens eines Kunstharzes, das aus
      a) 50 bis 99,9 Gew.% wenigstens eines Esters aus 3 bis 6 C-Atome enthaltenden α,β-monoethylenisch ungesättigten Carbonsäuren und 1 bis 18 C-Atome enthaltenden Alkanolen oder wenigstens eines Vinylesters einer 2 bis 8 C-Atome enthaltenden aliphatischen Monocarbonsäure oder eines Gemisches dieser Monomeren (Monomere a),
      b) 0,1 bis 12 Gew.% wenigstens einer 3 bis 8 C-Atome enthaltenden a,β-monoethylenisch ungesättigten ein- oder zweibasischen Säure, deren Anhydriden oder eines Gemisches dieser Monomeren (Monomere b),
      c) 0 bis 10 Gew.% eines oder mehrerer monoethylenisch ungesättigter Acetophenon- oder Benzophenonderivate, oder eines Gemisches dieser Monomeren (Monomere c) und
      d) 0 bis 35 Gew.% eines oder mehrerer sonstiger copolymerisierbarer monoethylenisch ungesättigter Monomeren (Monomere d), in einpolymerisierter Form,

   aufgebaut ist, wobei die Gewichtsanteile der Monomeren a, b und d innerhalb der angegebenen Grenzen so gewählt sind, daß ein nur aus diesen Monomeren aufgebautes Kunstharz eine Glasübergangstemperatur von 40 bis. -50 °C aufweisen würde,
   B) wenigstens ein metallisches Kation der Ladungszahl 2 bis 4 in wasserlöslicher Form,
   C) 0 bis 10 Gew.%, bezogen auf das Kunstharz A, Benzophenon oder Acetophenon oder eines oder mehrerer nicht monoethylenisch ungesättigter Acetophenon- oder Benzophenonderivate oder eines Gemisches dieser Wirkstoffe,
   D) wirksame Mengen an Emulgatoren oder Schutzkolloiden oder Gemischen dieser Wirkstoffe,
   E) wenigstens 5 Gew.% Wasser und
   F) 0 bis 85 Gew.% feinteilige Füllstoffe,

   mit der Maßgabe, daß die Gesamtmenge, gebildet aus den Monomeren c und der Komponente C, bezogen auf das Kunstharz A, 0,05 bis 10 Gew.% beträgt und die Gesamtmenge der Kationen B so bemessen wird, daß sie die 0,2- bis 6-fache Menge der zur in Form der Monomeren b in das Kunstharz A eingebauten Menge an Säurefunktionen entsprechenden Menge ihrer konjugierten Basen zu neutralisieren vermag.

2. Kunstharzzubereitungen nach Anspruch 1, deren Kunstharze A als Monomere b α,β-monoethylenisch ungesättigte Mono- oder Dicarbonsäuren, deren Anhydride oder Gemische dieser Monomeren einpolymerisiert enthalten.

3. Kunstharzzubereitungen nach Anspruch 1 oder 2, deren Kunstharze A als Monomere c wenigstens eine der Verbindungen

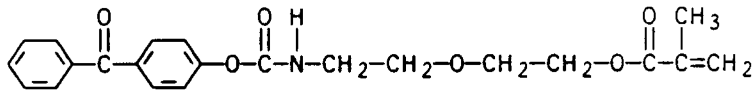

oder

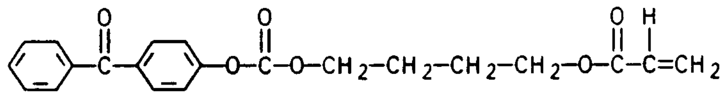

einpolymerisiert enthalten.

4. Kunstharzzubereitungen nach den Ansprüchen 1 bis 3, deren Kunstharze A die Monomeren a, b und d in solchen Mengen einpolymerisiert enthalten, daß ein nur aus den Monomeren a, b und d aufgebautes Kunstharz eine Glasübergangstemperatur von -30 bis -10 ° C aufweisen würde.

5. Kunstharzzubereitungen nach den Ansprüchen 1 bis 4, die als metallisches Kation $Zn^{2+}$ enthalten.

6. Kunstharzzubereitungen nach den Ansprüchen 1 bis 5, die als metallisches Kation $Zn^{2+}$ in Form einer ammoniakalischen wäßrigen Zn(II)-ammoniumhydrogencarbonat-Lösung enthalten.

7. Kunstharzzubereitungen nach den Ansprüchen 1 bis 6, die als Komponente C Benzophenon enthalten.

8. Kunstharzzubereitungen nach den Ansprüchen 1 bis 7, die als Komponente D eine Verbindung der allgemeinen Formel X

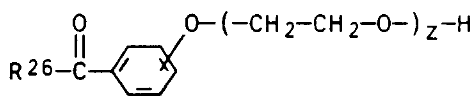 (X),

in der die Variablen folgende Bedeutung haben:

z 1 bis 200

$R^{26}$ $-CH_3$, $-C_6H_5$ oder eine durch geradkettige oder verzweigte Alkylgruppen mit 1 bis 18 C-Atomen substituierte Phenylgruppe,

enthalten.

9. Verfahren zur Herstellung von Kunstharzzubereitungen gemäß den Ansprüchen 1 bis 8, dadurch gekennzeichnet, daß man die Monomeren a bis d in Gegenwart von Emulgatoren D in wäßriger Emulsion radikalisch polymerisiert und in die so erhältliche Kunstharzdispersion die Komponenten B, C und F einarbeitet.

10. Verwendung der wäßrigen Kunstharzzubereitungen gemäß den Ansprüchen 1 bis 8 zum Beschichten, Kleben, Dichten oder Imprägnieren.

**Claims**

1. An aqueous synthetic resin formulation, essentially containing

A) from 3 to 75% by weight of one or more synthetic resins which are composed of

a) from 50 to 99.9% by weight of one or more esters of $\alpha,\beta$-monoethylenically unsaturated carboxylic acids of 3 to 6 carbon atoms and alkanols of 1 to 18 carbon atoms or one or more vinyl esters of an aliphatic monocarboxylic acid of 2 to 8 carbon atoms or of a mixture of these monomers (monomers a),

b) from 0.1 to 12% by weight of one or more $\alpha,\beta$-monoethylenically unsaturated monobasic or dibasic acids of 3 to 8 carbon atoms, of their anhydrides or of a mixture of these monomers (monomers b),

c) from 0 to 10% by weight of one or more monoethylenically unsaturated acetophenone or benzophenone derivatives or of a mixture of these monomers (monomers c) and

d) from 0 to 35% by weight of one or more other copolymerizable monoethylenically unsaturated monomers (monomers d), in polymerized form,

the weights of monomers a, b and d being chosen within the stated limits in such a way that a synthetic resin consisting only of these monomers would have a glass transition temperature of from 40 to -50 ° C,

B) one or more metal cations having a charge of from 2 to 4, in water-soluble form,

C) from 0 to 10% by weight, based on the synthetic resin A, of benzophenone or acetophenone or of one or more acetophenone or benzophenone derivatives which are not monoethylenically unsaturated or of a mixture of these active ingredients,

D) effective amounts of emulsifiers or protective colloids or a mixture of these active ingredients,

E) not less than 5% by weight of water and

F) from 0 to 85% by weight of finely divided fillers,

with the proviso that the total amount of the monomers c and of component C is from 0.05 to 10% by weight, based on the synthetic resin A, and the total amount of the cations B is such that it is capable of neutralizing from 0.2 to 6 times the amount, corresponding to the amount of acid functions incorporated in the form of the monomers b in the synthetic resin A, of their conjugated bases.

**2.** A synthetic resin formulation as claimed in claim 1, whose synthetic resin A contains, as polymerized monomers b, α,β-monoethylenically unsaturated mono- or dicarboxylic acids, their anhydrides or a mixture of these monomers.

**3.** A synthetic resin formulation as claimed in claim 1 or 2, whose synthetic resin A contains, as polymerized monomers c, one or more of the compounds

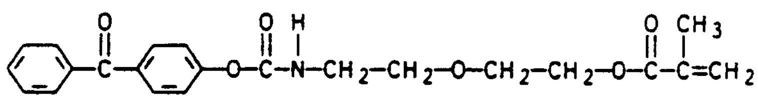

or

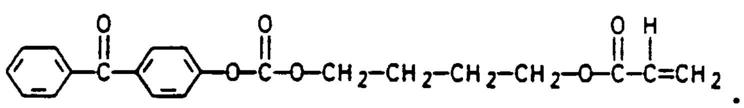

.

**4.** A synthetic resin formulation as claimed in any of claims 1 to 3, whose synthetic resin A contains the monomers a, b and d polymerized in amounts such that a synthetic resin composed only of the monomers a, b and d would have a glass transition temperature of from -30 to -10 ° C.

**5.** A synthetic resin formulation as claimed in any of claims 1 to 4, which contains $Zn^{2+}$ as the metal cation.

**6.** A synthetic resin formulation as claimed in any of claims 1 to 5, which contains, as the metal cation, $Zn^{2+}$ in the form of an ammoniacal aqueous Zn(II) ammonium bicarbonate solution.

**7.** A synthetic resin formulation as claimed in any of claims 1 to 6, which contains benzophenone as component C.

**8.** A synthetic resin formulation as claimed in any of claims 1 to 7, which contains, as component D, a compound of the formula X

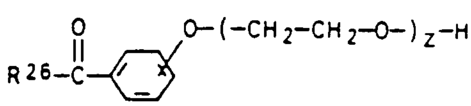

(X),

where z is from 1 to 200 and $R^{26}$ is $-CH_3$ or $-C_6H_5$ or is phenyl which is substituted by straight-chain or branched alkyl of 1 to 18 carbon atoms.

**9.** A process for the preparation of a synthetic resin formulation as claimed in any of claims 1 to 8, wherein the monomers a to d are subjected to free radical polymerization in aqueous emulsion in the presence of emulsifiers D, and the components B, C and F are incorporated in the synthetic resin dispersion obtainable in this manner.

**10.** Use of an aqueous synthetic resin formulation as claimed in any of claims 1 to 8 for coating, adhesive bonding, sealing or impregnation.

**Revendications**

**1.** Préparations aqueuses de résines synthétiques, qui contiennent, essentiellement,
A) 3 à 75% en poids d'au moins une résine synthétique, qui est constituée de
a) 50 à 99,9% en poids d'au moins un ester d'acides carboxyliques α,β-monoéthyléniquement insaturés, comportant de 3 à 6 atomes de carbone et d'alcanols comportant de 1 à 18 atomes de carbone, ou d'au moins un ester vinylique d'un acide monocarboxylique aliphatique, comportant de 2 à 8 atomes de carbone, ou d'un mélange de ces monomères (monomères a),
b) 0,1 à 12% en poids d'au moins un acide monobasique ou dibasique, α,β-monoéthyléniquement insaturé, comportant de 3 à 8 atomes de carbone, de ses anhydrides, ou d'un mélange de ces monomères (monomères b),
c) 0 à 10% en poids d'un ou plusieurs dérivés de l'acétophénone ou de la benzophénone, monoéthyléniquement insaturés, ou d'un mélange de ces monomères (monomères c) et
d) 0 à 35% en poids d'un ou plusieurs d'autres monomères monoéthyléniquement insaturés et copolymérisables (monomères d), sous forme incorporée par polymérisation,
où les fractions pondérales des monomères a, b et d sont choisies, parmi les limites indiquées, en une manière telle qu'une résine synthétique qui ne serait constituée que de ces monomères seulement, présentât une température de transition vitreuse de 40 à -50 °C,
B) au moins un cation métallique d'une charge de 2 à 4, sous forme soluble dans l'eau,
C) 0 à 10% en poids, par rapport à la résine synthétique A, de benzophénone ou d'acétophénone, ou d'un ou plusieurs dérivés de l'acétophénone ou de la benzophénone non monoéthyléniquement insaturés, ou d'un mélange de ces substances actives,
D) des proportions actives d'émulsifs ou de colloïdes protecteurs, ou de mélanges de ces substances actives,
E) au moins 5% en poids d'eau et
F) 0 à 85% en poids de charges finement divisées,
avec la condition que la quantité totale, formée des monomères c et du composant C, rapportée à la résine synthétique A, atteigne 0,05 à 10% en poids et qu'elle permette de neutraliser 0,2 à 6 fois la quantité de la proportion de ses bases conjuguées correspondant en fonctions acide à la quantité incorporée à la résine synthétique A sous forme de monomères b.

**2.** Préparations de résines synthétiques suivant la revendication 1, dont les résines synthétiques A contiennent, à titre de monomères b, des acides monocarboxyliques ou dicarboxyliques α,β-monoéthyléniquement insaturés, leurs anhydrides, ou des mélanges de ces monomères.

**3.** Préparations de résines synthétiques suivant la revendication 1 ou 2, dont les résines synthétiques A contiennent, à titre de monomères c, au moins l'un des composés

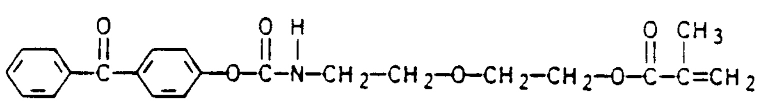 ou

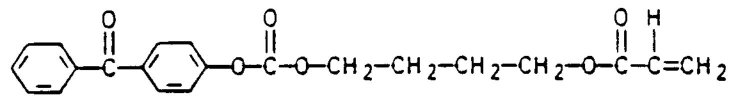

en incorporation polymérique.

**4.** Préparations de résines synthétiques suivant l'une quelconque des revendications 1 à 3, dont les résines synthétiques A contiennent les monomères a, b et d incorporés par polymérisation en proportions telles qu'une résine synthétique qui ne serait constituée que des monomères a, b et d seulement présentât une température de transition vitreuse de -30 à -10 °C.

**5.** Préparations de résines synthétiques suivant l'une quelconque des revendications 1 à 4, qui contiennent $Zn^{2+}$ à titre de cation métallique.

**6.** Préparations de résines synthétiques suivant l'une quelconque des revendications 1 à 5, qui contiennent, à titre de cation métallique, $Zn^{2+}$ sous forme d'une solution ammoniacale aqueuse d'hydrogénocarbonate de Zn(II)-ammonium.

**7.** Préparations de résines synthétiques suivant l'une quelconque des revendications 1 à 6, qui contiennent de la benzophénone à titre de composant C.

**8.** Préparations de résines synthétiques suivant l'une quelconque des revendications 1 à 7, caractérisées en ce qu'elle contiennent, à titre de composant D, un composé de la formule générale X

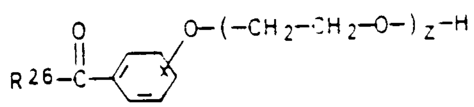

(X),

dans laquelle

- z est un ombre dont la valeur varie de 1 à 200,
- $R^{26}$ représente un groupe $-CH_3$, $-C_6H_5$, ou un radical phényle substitué par des radicaux alkyle à chaîne droite ou à chaîne ramifiée, comportant de 1 à 18 atomes de carbone.

**9.** Procédé de fabrication de préparations de résines synthétiques suivant l'une quelconque des revendications 1 à 8, caractérisé en ce que l'on polymérise par voie radicalaire les monomères a à d en présence d'émulsifs D en émulsion aqueuse et on incorpore les composants B, C et F à la dispersion de résine synthétique ainsi obtenue.

**10.** Utilisation des préparations aqueuses de résines synthétiques suivant l'une quelconque des revendications 1 à 8, pour le revêtement, le collage, l'étanchement ou le masticage, ou l'imprégnation.